# EUROPEAN PATENT APPLICATION

(11) **EP 2 228 287 A1**
(43) Date of publication of application: **15.09.2010**
(21) Application number: 09380050.6
(22) Date of filing: 12.03.2009
(51) Int. Cl.: B62D 43/08, B62D 43/00

(54) **Mechanism for lifting and lowering a spare wheel from a heavy vehicle, and heavy vehicle**

(71) Applicant: Carrocerías Ayats, S.A., 17401 Arbúcies Gerona (ES)
(72) Inventor: Vila Pascual, Rita, 17401 Arbúcies (Girona) (ES)
(74) Representative: Gislon, Gabriele

(57) **Abstract**

The invention relates to a mechanism for lifting and lowering a spare wheel from a heavy vehicle, and a heavy vehicle. The mechanism comprises a support member (1) in which to fix a wheel (R), which is attached, by means of an articulation (A), to a structure (E) of a heavy vehicle to be moved between a retracted position for housing the wheel (R) inside a compartment (C) of the heavy vehicle (V) and an extended position in which to extract the wheel (R) from the compartment (C), and vice versa.

It also comprises a cable (3) attached at one end (3a) to the support member (1) and drive means attached to the other end (3b) of the cable (3), to draw it in or to release it, moving the support member (1) and thus lifting or lowering the wheel (R).

The heavy vehicle has installed therein the mechanism for lifting and lowering a wheel (R) through an opening (2).

## Description

### Field of the Art

The present invention generally relates, in a first aspect, to a mechanism for lifting and lowering a spare wheel from a heavy vehicle, such as a bus or a coach, by means of a support member articulated with respect to said vehicle, and particularly to a mechanism comprising a flexible connecting element operated under traction, such as a cable, attached to said support member and to drive means provided for moving it, drawing it in or releasing it, in order to lift or lower the spare wheel in relation to a compartment of the vehicle.

A second aspect of the invention relates to a heavy vehicle incorporating the mechanism proposed by the first aspect of the invention.

### Prior State of the Art

It is known that the mere fact of changing a wheel of a heavy vehicle is a very difficult operation for the person in charge of carrying it out, requiring him or her to make a great effort both for lowering the spare wheel from the vehicle, and for transporting it, either by means of a trolley or making it roll after incorporating it to a rolling position, as well as for transporting and lifting the flat wheel, due to the fact that such classes of wheels have a considerable weight.

Different proposals relating to mechanisms which allow facilitating part of the described operations are known, such mechanisms including mobile support members in which the wheel is to be fixed, and the movement of which allows lifting or lowering the wheel, respectively, to and from a compartment of the vehicle.

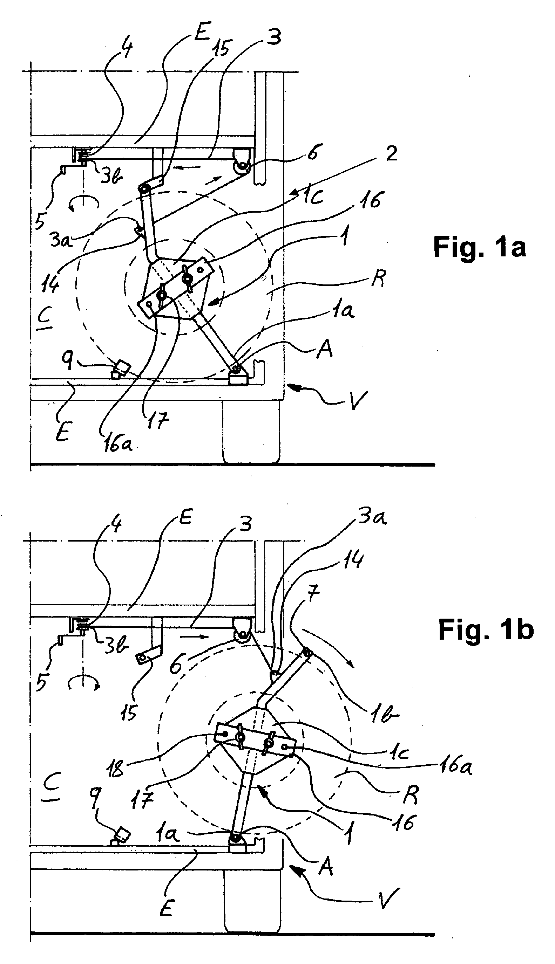

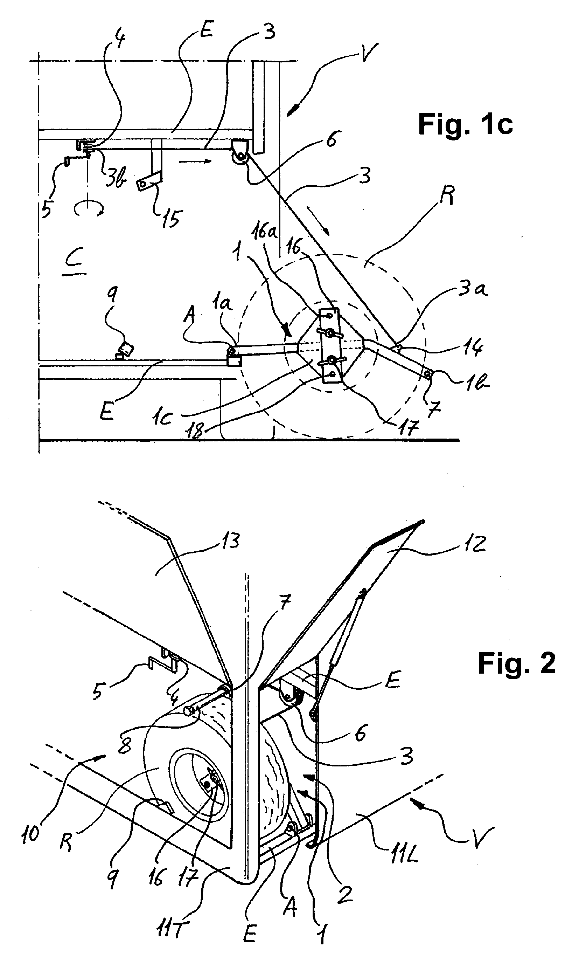

One of such mechanisms is described in utility model UA 22136 (U), which relates to a device for installing and holding a spare wheel in the engine compartment of a bus. The device comprises a support member for holding the wheel, including two parallel bars interconnected by crosspieces, which are articulated at first ends to the structure of the vehicle for the purpose of pivoting horizontally until contacting with the ground at their ends opposite to said first ends. The wheel is vertically housed in the compartment (see Figure 1 of said document), with the bars of the support member further outwards from the compartment, which has an opening on a side close to the rear area of the body of the vehicle to allow extracting and introducing the wheel. Since the support member is located in the position in which the bars are supported at their second ends on the ground (see Figure 6 of UA 22136 (U)), such bars define an inclined plane on which the wheel is arranged, which requires the driver or operator to make an effort to remove the wheel from the support member, raising it until reaching a rolling position which allows transporting it for the purpose of replacing the flat wheel.

Utility model UA 26406 (U) likewise proposes another mechanism for installing and holding a spare wheel in a compartment of a bus. In this case, the wheel is horizontally housed inside the compartment fixed to a support member moving horizontally on guides until exiting (when the wheel is to be taken out of the compartment), together with the wheel, through an opening of the compartment defined on a side of the vehicle. Once the end-of-run position has been reached with the support member and the wheel in a horizontal position, already outside the compartment, the support member pivots towards the ground about an articulation attaching it to a fixed structure of the vehicle, until contacting, at the free ends of bars forming it, with the ground in an inclined position, which requires to manually remove the wheel from the support member, raising it until reaching a rolling position.

None of the mentioned background documents teaches or suggests a device or mechanism for lifting and lowering a spare wheel from a heavy vehicle incorporating a drive mechanism by means of which the movements of the support member and of the spare wheel fixed thereto are carried out, without having to make the great effort required by the manual handling of conventional mechanisms to lift and lower a spare wheel from a heavy vehicle.

### Description of the Invention

It is necessary to provide an alternative to the state of the art allowing an operator or driver of a heavy vehicle to carry out the operations of lifting and lowering a spare wheel (or of lifting and lowering a flat wheel or a wheel repaired after a puncture), such that he or she does not have to make the excessive effort involved in manually handling one of said wheels, with a considerable weight.

To that end, in a first aspect, the present invention provides a mechanism for lifting and lowering a spare wheel from a heavy vehicle, of the type comprising a support member in which to fix a spare wheel, said support member being configured to be attached at a first end portion, by means of an articulation, to a fixed structure of said heavy vehicle to be moved between a retracted position in which to house said spare wheel inside a compartment of said heavy vehicle, and an extended position in which to extract said spare wheel from said compartment through an opening, and vice versa.

Unlike conventional mechanisms, the mechanism proposed by the first aspect of the invention comprises a flexible connecting element operated under traction attached at a first end to said support member, and drive means attached to a second end of said flexible connecting element operated under traction, and intended for moving it, drawing it in or releasing it, for the purpose of carrying out said movement of the support member.

Said flexible connecting element operated under traction is generally a cable, although for other embodiments it is of another type, such as a chain.

For one embodiment, said drive means comprise a rotating reel for winding and unwinding said cable, said reel being intended to be attached with freedom of movement to said structure of said heavy vehicle at a point considered to be suitable to fulfill the function of lifting and lowering the spare wheel with respect to the compartment.

Depending on the embodiment the drive of said reel is manual or automatic, the drive means comprising, in the first case, a crank connected to the rotating reel and intended to be manually driven to make the reel rotate, and in the second case, a motor with a shaft connected (directly or through a kinematic chain) to the rotating reel, to make it rotate automatically, for example after the actuation on an actuation member associated thereto.

According to a more elaborated embodiment, the drive means comprise a pulley intended to be attached to said structure of said heavy vehicle at a point of attachment in relation to the position of the articulated attachment and of the center of gravity of the support member when it has a spare wheel fixed thereto, which causes said drive means, in order to move the support member from its retracted position until its extended position, to have to pull on the cable until the support member plus the spare wheel reach an unstable balance point on the articulation, and to have to restrain and release said cable in a controlled manner once the support member plus the spare wheel have passed said unstable balance point and tend to fall by gravity towards the outside of said opening.

For one embodiment for which the drive means only have the indicated rotating reel, without any pulley, the description made in the previous paragraph with reference to the location of the point of attachment of the pulley is valid to refer to the point of attachment of the reel with the fixed structure of the vehicle.

A second aspect of the present invention relates to a heavy vehicle, such as a bus or a coach, comprising a compartment for housing a spare wheel and at least part of a mechanism such as the one proposed by the first aspect of the invention, attached to a fixed structure of the vehicle.

For the purpose of introducing and extracting said spare wheel, together with the support member, into and out of said compartment, the body of the heavy vehicle proposed by the second aspect of the invention defines a first opening to said compartment.

The advantages of having such compartment, to house the spare wheel, associated to the mechanism proposed by the first aspect of the invention are considerable, not requiring the use of another space of the vehicle (such as the trunk or boot) provided for other purposes, as well as offering a great ease in carrying out the operations of lifting and lowering a spare wheel (or the flat wheel already changed, or after it has been repaired), saving the person in charge of carrying out such operations from a large amount of effort.

### Brief Description of the Drawings

The previous and other advantages and features will be more fully understood from the following detailed description of some embodiments with reference to the attached drawings, which must be considered as illustrative and non-limiting, in which:
Figures 1a to 1c are schematic depictions showing the mechanism proposed by the present invention attached to a fixed structure of a heavy vehicle, in three different respective operative positions representing the extraction of a spare wheel (illustrated with dotted lines) from a compartment of the vehicle until depositing it on the ground;
Figure 2 is a perspective view of a rear part of the heavy vehicle proposed by the second aspect of the invention, which has installed therein the mechanism proposed by the first aspect of the invention supporting a wheel housed inside a compartment;
Figure 3 is a side elevational view of part of the view of the heavy vehicle illustrated in Figure 2; and
Figure 4 is an enlarged elevational detail of part of a spare wheel fixed to the support member of the mechanism proposed by the first aspect of the invention.

### Detailed Description of Specific Embodiments

The attached figures show the mechanism proposed by the first aspect of the present invention installed in the heavy vehicle proposed by the second aspect of the invention. The following description of the different illustrated elements is valid to describe both aspects of the invention.

As illustrated in Figures 1a to 1c, 2 and 3, the mechanism for lifting and lowering a spare wheel from a heavy vehicle proposed by the first aspect of the present invention comprises a support member 1, which in the illustrated embodiments adopts the form of a support arm with two portions angled to one another, and a central plate or part 1c integral with said arm.

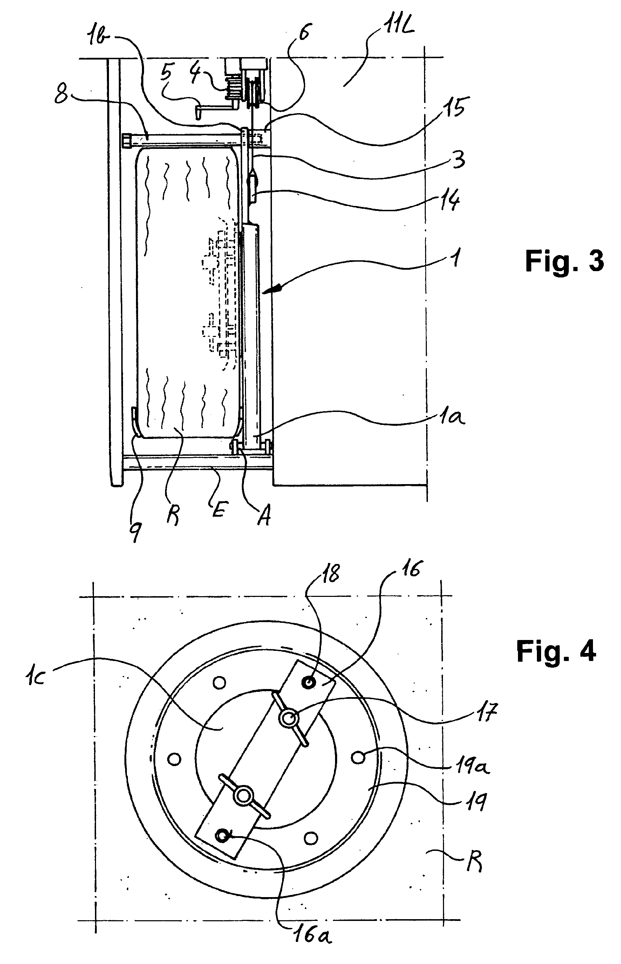

Said central plate 1c comprises fixing means for fixing the wheel R to the support member 1. For the illustrated embodiments, said fixing means (which are particularly visible in Figure 4) include pins 18 extending from one side of the central plate 1c and which are to be inserted in corresponding holes 19a of the wheel rim 19 of the wheel R, as well as a plate 16 with corresponding holes 16a into which said pins 18 are to be inserted after traversing the holes 19a. The fixing means also comprise nuts 17 which are screwed in two of the pins 18 having an outer thread for such purpose, in order to firmly trapping the wheel rim 19 of the wheel R between the plate 16 and the plate 1c.

As can be seen in Figures 1a to 1c, 2 and 3, the support member 1 is attached at a first end portion 1a, by means of an articulation A, to a fixed structure E of the heavy vehicle V to be moved between a retracted position (illustrated in Figures 1a, 2 and 3), in which to house said spare wheel R inside a compartment C of said heavy vehicle V, and an extended position (illustrated in Figure 1c) in which to extract said spare wheel R from said compartment C through an opening 2 (see Figure 2), and vice versa.

For the illustrated embodiment, said articulation A is arranged around a substantially horizontal axis, although for other non-illustrated embodiments it can be arranged around a non-horizontal axis.

The proposed mechanism comprises a flexible connecting element operated under traction, which is a cable 3 for the illustrated embodiment, which cable is attached at a first end 3a to a tab or projection 14 of the support member 1, in an area close to a second end portion 1b opposite to said first end portion 1a.

Said cable 3 is attached, at a second end 3b, to drive means included in the mechanism proposed by the first aspect of the invention and intended to move it, drawing it in or releasing it for the purpose of carrying out the movement of the support member 1, and therefore lifting or lowering the wheel R fixed thereto.

As is observed in Figures 1a to 1c, 2 and 3, for the embodiment illustrated therein said drive means comprise a rotating reel 4 for winding and unwinding said cable 3, said rotating reel 4 being attached with freedom of movement to the fixed structure E of the heavy vehicle V.

The drive means also comprise a crank 5 connected to the rotating reel 4 and intended to be manually driven to make it rotate.

As can be seen in Figures 1a to 1c, 2 and 3, the drive means comprise a pulley 6 attached to the fixed structure E of the heavy vehicle V.

With reference now to Figures 1a to 1c, they show three different positions of the path of movement of the support member 1, and of the wheel R fixed thereto, corresponding to three different respective operative positions representing the extraction of a spare wheel R from a compartment C of the vehicle V until depositing it on the ground.

For the extraction of the wheel R to occur as illustrated in Figures 1a to 1c, the point of attachment of the pulley 6 to the fixed structure E must be located in such a site (as illustrated in Figures 1a to 1c), in relation to the position of the articulation A and of the center of gravity of the support member 1, when it has a wheel R fixed thereto, that it causes the drive means, in order to move the support member 1 from its retracted position to its extended position, to have to pull on the cable 3 until the support member 1 plus the spare wheel R reach an unstable balance point on the articulation A, and to have to restrain and release the cable 3 in a controlled manner once the support member 1 plus the spare wheel R have passed said unstable balance point and tend to fall by gravity towards the outside of the opening 2.

The embodiment illustrated by Figures 1a to 1c fulfills such conditions of location of the pulley 6, such that to start the extraction of the wheel R, as is seen in Figure 1a, the crank must be moved according to the direction of the illustrated rotating arrow around the axis of the reel 4, therefore the reel 4 winds the cable 3, the latter pulling on the support member 1 in the direction indicated by the arrow, i.e., towards the outside of the opening 2.

Continuing the rotation of the crank 5 in the same direction, the support member 1 plus the spare wheel R reach an unstable balance point on the articulation A (situation not shown), which when it is passed causes the assembly of support member 1 plus wheel R to tend to fall by gravity towards the outside of the opening 2, at which time the reel 4 brakes said fall, and by carrying out a rotation of the crank 5 with a direction opposite to that of Figure 1a, as shown in Figures 1b and 1c, the cable 3 is released in a controlled manner, i.e., the reel 4 is unwound, as indicated by the arrows illustrated therein, until the wheel R is gently deposited on the ground.

The unstable balance point is generally passed due to the actual inertia of the movement of the support member 1 plus the wheel R, but if such inertia is not enough, it would only be necessary to apply a slight force on the wheel R towards the outside of the opening 2 in order to pass the unstable balance point.

To carry out the opposite operation, i.e., the operation of lifting the support member 1 together with the wheel R (or without any wheel where appropriate), operations similar to those illustrated in Figures 1a to 1c are carried out, but moving the crank 5 in the opposite direction, i.e., in a first moment the crank 5 is rotated to lift the wheel R until it passes, together with the support member 1, the unstable balance point on the articulation A (due to the actual inertia or by slightly pushing the wheel R towards the inside of the compartment C), tending to fall by gravity towards the inside of the compartment C, and then the cable 3 is restrained and released until gently housing the wheel R inside the compartment C, either depositing it on the bottom thereof or, when the latter has no bottom, on a seat element 9 (see Figures 1a to 1c, 2 and 3) fixed in the fixed structure E of the heavy vehicle V, intended to support the spare wheel R in a seated manner when it is housed in the compartment C.

Although for other embodiments not illustrated the position of the spare wheel R is different from that illustrated in the figures, for the illustrated preferred embodiment the support member 1 is configured to be fixed to the spare wheel R, with the latter in a rolling position, and intended to be moved, pivoting about the articulation A, between the retracted position and the extended position, and vice versa, keeping the spare wheel R in said rolling position at all times, said rolling position having been illustrated as a substantially vertical position of the wheel R, i.e., with its rolling axis substantially horizontal.

The wheel R is thus deposited, according to Figure 1c, in a rolling position which makes the driver or operator only have to roll it to the desired location when he or she removes it from the support member 1 (unscrewing the nuts 17 and removing the plate 16), without having to make the great effort which he or she had to make when using conventional mechanisms, since the latter do not deposit the wheel in a rolling position on the ground.

As illustrated in Figures 1a to 1c and 2, the support member 1 comprises, in the mentioned second end portion 1b, a fixing configuration 7, which in the illustrated example is a through hole 7. Moreover, the mechanism comprises a fixing element 8 for fixing the support member 1 to the fixed structure E of the heavy vehicle V, cooperating with the fixing configuration 7.

For the illustrated embodiment (see Figures 2 and 3), said fixing element is an elongated screw 8 which is screwed to a threaded hole of a part 15 (see Figures 1a to 1c and 3) of the fixed structure E, once the through hole 7 of the end portion 1b of the support member 1 is traversed.

Said elongated screw 8 collaborates with the seat part 9 to limit the unwanted movement of the wheel R when it is housed inside the compartment C (for example, due to the movement of the vehicle), acting as an upper stop, as illustrated in Figure 3.

The body of the heavy vehicle V proposed by the second aspect of the invention defines a first opening 2 (previously referred to simply as opening 2) to the compartment C to introduce the spare wheel R, together with the support member 1, and to extract it from the compartment C, which, for the illustrated embodiment and especially visible in Figure 2, is arranged at a side part 11L of the body close to a rear part 11T.

The body also defines a second opening 10 to the compartment C, which allows an operator to access the crank 5 (or an actuation member of a motor, where appropriate), and which, for the embodiment illustrated by Figure 2, is arranged at a rear part 11T of the body.

The heavy vehicle V comprises two doors 12, 13, each of them to cover a respective one of said openings 2, 10.

For one embodiment, the compartment C is arranged adjacent to the trunk (not shown) of the heavy vehicle V.

A person skilled in the art could introduce changes and modifications in the described embodiments without departing from the scope of the invention as it is defined in the attached claims.

## Claims

1. A mechanism for lifting and lowering a spare wheel from a heavy vehicle, of the type comprising a support member (1) in which to fix a spare wheel (R), said support member (1) being configured to be attached at a first end portion (1a), by means of an articulation (A), to a fixed structure (E) of said heavy vehicle to be moved between a retracted position in which to house said spare wheel (R) inside a compartment (C) of said heavy vehicle (V), and an extended position in which to extract said spare wheel (R) from said compartment (C) through an opening (2) and vice versa, said mechanism being **characterized in that** it comprises a flexible connecting element operated under traction (3) attached at a first end (3a) to said support member (1), and drive means attached to a second end (3b) of said flexible connecting element operated under traction (3), and intended to move it, drawing it in or releasing it, for the purpose of carrying out said movement of the support member (1).

2. The mechanism according to claim 1, **characterized in that** said drive means comprise a rotating reel (4) for winding and unwinding said flexible connecting element operated under traction (3), which is a cable, said rotating reel (4) being intended to be attached with freedom of movement to said fixed structure (E) of said heavy vehicle (V).

3. The mechanism according to claim 2, **characterized in that** said drive means comprise a crank (5) connected to said rotating reel (4) and intended to be manually driven to make the rotating reel (4) rotate.

4. The mechanism according to claim 2, **characterized in that** said drive means comprise a motor with a shaft connected to said rotating reel (4) to make the rotating reel (4) rotate automatically.

5. The mechanism according to claim 3 or 4, **characterized in that** said drive means comprise a pulley (6) intended to be attached to said fixed structure (E) of said heavy vehicle (V) at a point of attachment in relation to the position of said articulation (A) and of the center of gravity of the support member (1) when it has a spare wheel (R) fixed thereto, which causes said drive means, in order to move the support member (1) from its retracted position to its extended position, to have to pull on the cable (3) until the support member (1) plus the spare wheel (R) reach an unstable balance point on the articulation (A), and to have to restrain and release said cable (3) in a controlled manner once the support member (1) plus the spare wheel (R) have passed said unstable balance point and tend to fall by gravity towards the outside of said opening (2).

6. The mechanism according to any of the previous claims, **characterized in that** said support member (1) is configured to be fixed to said spare wheel (R), with the latter in a rolling position, and intended to be moved, pivoting about said articulation (A), between said retracted position and said extended position, and vice versa, keeping the spare wheel (R) in said rolling position at all times.

7. The mechanism according to any of the previous claims, **characterized in that** said articulation (A) is arranged around a substantially horizontal axis.

8. The mechanism according to any of the previous claims, **characterized in that** said support member (1) comprises a fixing configuration (7) in a second end portion (1b) opposite to said first end portion (1a), and **in that** said mechanism comprises a fixing element (8) for fixing said support member (1) to said fixed structure (E) of the heavy vehicle (V), cooperating with said fixing configuration (7).

9. The mechanism according to any of the previous claims, **characterized in that** it comprises a seat element (9) to be fixed in said fixed structure (E) of the heavy vehicle (V), and intended to support said spare wheel (R) in a seated manner when it is housed in said compartment (C).

10. A heavy vehicle of the type comprising a compartment (C) to house a spare wheel (R) and at least part of a mechanism for lifting and lowering said spare wheel (R) with respect to said compartment (C), said heavy vehicle being **characterized in that** said mechanism is a mechanism according to any one of claims 1 to 8 attached to a fixed structure (E) of the vehicle (V), and **in that** the body of said heavy vehicle (V) defines at least a first opening (2) to said compartment (C) to introduce and extract said spare wheel (R), together with the support member (1), into and out of said compartment (C).

11. The heavy vehicle according to claim 10, **characterized in that** said body defines a second opening (10) to said compartment (C), allowing an operator to access at least said crank (5) or an actuation member of said motor, where appropriate.

12. The heavy vehicle according to claim 11, **characterized in that** said second opening (10) is arranged at a rear part (11T) of said body, and **in that** said first opening (2) is arranged at a side part (11L) of said body close to said rear part (11T).

13. The vehicle according to claim 12, **characterized in that** it comprises at least two doors (12, 13), each of them to cover a respective one of said openings (2, 10).

14. The vehicle according to claim 12, **characterized in that** said compartment (C) is arranged adjacent to the trunk of said heavy vehicle (V).

15. The vehicle according to any of claims 10 to 14, **characterized in that** said compartment (C) is open at the lower part.
